(19) **Europäisches Patentamt / European Patent Office / Office européen des brevets**

(11) **EP 2 448 039 A1**

(12) **EUROPEAN PATENT APPLICATION**
published in accordance with Art. 153(4) EPC

(43) Date of publication:
**02.05.2012 Bulletin 2012/18**

(21) Application number: **11806473.2**

(22) Date of filing: **11.07.2011**

(51) Int Cl.:
*H01M 2/10* (2006.01)     *H01M 2/20* (2006.01)

(86) International application number:
**PCT/JP2011/003957**

(87) International publication number:
**WO 2012/008138 (19.01.2012 Gazette 2012/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.07.2010 JP 2010160429**

(71) Applicant: **Panasonic Corporation
Kadoma-shi
Osaka 571-8501 (JP)**

(72) Inventors:
• **FUKUDA, Shinsuke
Chuo-ku Osaka-shi
Osaka 540-6207 (JP)**
• **OTA, Shinji
Chuo-ku Osaka-shi
Osaka 540-6207 (JP)**

(74) Representative: **Schwabe - Sandmair - Marx
Patentanwälte
Stuntzstraße 16
81677 München (DE)**

(54) **METHOD FOR MANUFACTURING ASSEMBLED BATTERY, AND ASSEMBLED BATTERY**

(57) To provide a method for producing an assembled battery with which electric resistance welding can be performed more efficiently and flexibility in cell layout can be increased. The method includes a step of preparing a lead plate 5A for connecting a cell 4A and a cell 4B, and a lead plate 5B for connecting the cell 4B and a cell 4C; a step of causing the lead plates 5A and 5B to contact against the cell 4B with one end of the lead plate 5A and one end of the lead plate 5B being spaced apart from each other with a predetermined plate gap therebetween; and a step of electric resistance welding the lead plates 5A and 5B to the cell 4B by causing electrodes to contact against the one end of the lead plate 5A and the one end of the lead plate 5B from the side opposite to the cell 4B and applying electric current between the electrodes.

FIG.1

EP 2 448 039 A1

## Description

Technical Field

The present invention relates to an assembled battery having at least two cells, and a lead plate for electrically connecting these cells.

Background Art

Conventionally, for example, an assembled battery as described in the Patent Document 1 is known. The assembled battery as described in the Patent Document 1 has a plurality of batteries (cells) and a lead plate for electrically connecting these batteries. The lead plate and the batteries are spot welded to each other.

When this kind of assembled battery is produced, one lead plate is caused to contact against a surface of the cell, and a pair of electrodes is caused to contact at adjacent positions on this single lead plate. With this state, electric current is applied from one electrode to the other electrode through the surface of the cell to generate Joule heat corresponding to the resistance value of the lead plate, thereby to melt the surface of the lead plate facing to the cell.

However, in the method, the electrodes are caused to contact at the adjacent positions on the single lead plate. Thus, the electric current flows between the electrodes through the lead plate itself that is located between the electrodes. As a result, there is a problem that the Joule heat cannot be generated in an effective manner at the target welding position (the surface of the lead plate facing on the cell).

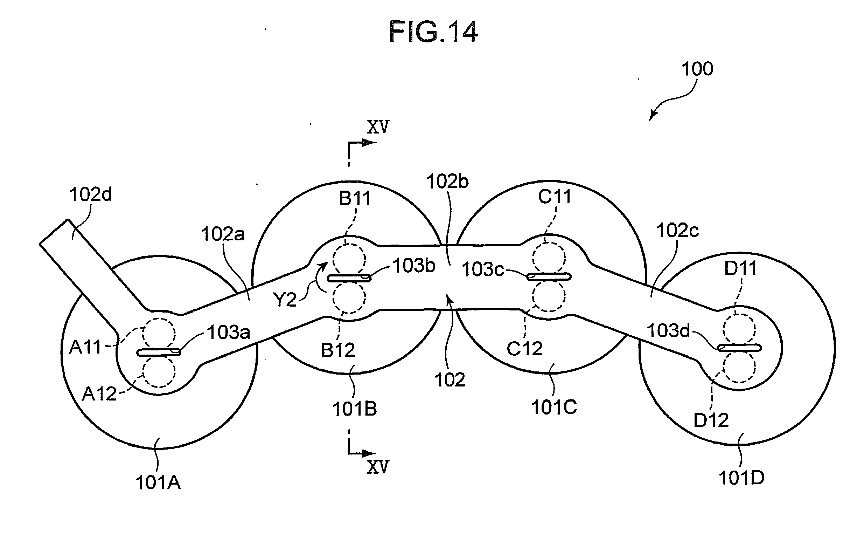

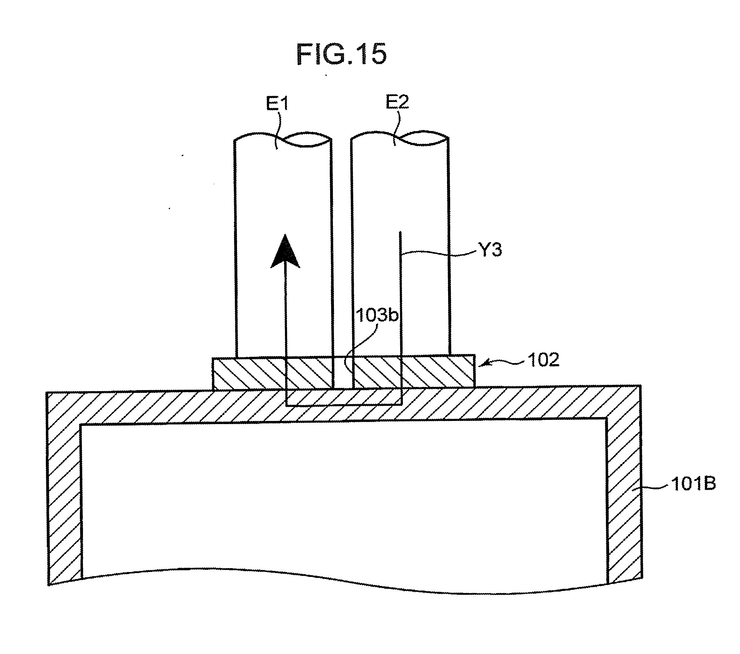

As a structure to solve this problem, for example, an assembled battery 100 having lead plates as shown in Figs. 14 and 15 is known. Fig. 14 is a side view showing a conventional battery pack. Fig. 15 is a cross sectional view taken along the line XV-XV in Fig. 14.

The assembled battery 100 comprises four cells 101A to 101D, and a single lead plate 102 for electrically connecting the cells 101A to 101D. This lead plate 102 integrally has a first connecting unit 102a for connecting the cell 101A and the cell 101B, a second connecting unit 102b for connecting the cell 101B and the cell 101C, a third connecting unit 102c for connecting the cell 101C and the cell 101D, and an external connecting unit 102d connected to the cell 101A and an external instrument (e.g., a safety device). The joints between these connecting units 102a to 102d are electric resistance welded to the cells 101A to 101D, respectively.

In addition, a slit 103a is formed between a welding position A11 and a welding position A12 of the cell 101A, a slit 103b is formed between a welding position B11 and a welding position B12 of the cell 101B, a slit 103c is formed between a welding position C11 and a welding position C12 of the cell 101C, and a slit 103d is formed between a welding position D11 and a welding position D12 of the cell 101D, in the lead plate 102.

For example, electrodes E1 and E2 (see Fig. 15) are caused to contact against the welding positions B11 and B12 of the cell 101A to apply electric current between the electrodes E1 and E2. In this case, because of the slit 103b between the electrodes E1 and E2, the electric current flows through the cell 101B as depicted by an arrow Y3 in Fig. 15, restricting the flow of the electric current through the lead plate 102 located between the electrodes E1 and E2.

However, in the conventional assembled battery 100 as shown in Figs. 14 and 15, it is impossible to prevent the flow of the electric current through the lead plate 102 itself when it circumvents the slits 103a to 103d (the slit 103b in Fig. 14) as depicted by an arrow Y2 in Fig. 14. Thus, it is impossible to reduce reactive current that does not contribute Joule heat of the lead plate 102 at a welding position.

In addition, in the assembled battery 100 shown in Figs. 14 and 15, one lead plate 102 connects four cells 101A to 101D. This means that the cells 101A to 101D arranged in a different layout require a lead plate 102 having a different shape. Thus, there is a problem of low flexibility in the layout of the cells 101A to 101D.

Patent Document 1: Japanese Patent Application Laid-Open No. 2009-70614

Summary of the Invention

An object of the present invention is to provide an assembled battery with which reactive current can be reduced and flexibility in cell layout can be increased, and a method for producing such an assembled battery.

In order solve the aforementioned problems, the present invention provides a method for producing an assembled battery having a first cell, a second cell electrically connected to the first cell, and at least one connected member electrically connected to the first cell and the second cell, comprising: a preparation step of preparing a first lead plate that is adapted to electrically connect the first cell and the second cell, and a second lead plate that is adapted to electrically connect the second cell and the connected member; an contacting step of causing one end of the first lead plate and one end of the second lead plate to contact against the second cell, in such a manner that the one end of the first lead plate and the one end of the second lead plate are spaced apart from each other with a predetermined first gap therebetween; a first welding step of electric resistance welding the first lead plate and the second lead plate to the second cell by means of causing electrodes to contact, from the side opposite to the second cell, against the one end of the first lead plate and the one end of the second lead plate, respectively, which have contacted against the second cell, and applying electric current between the electrodes; a second welding step of welding the other end of the first lead plate and the first cell; and a connection step of electrically connecting the other end of the second lead plate and the at least one connected member.

In addition, the present invention provides an assembled battery having a first cell, a second cell electrically connected to the first cell, and a connected member electrically connected to the first cell and the second cell, comprising: a first lead plate that is provided so as to span between the first cell and the second cell, the first lead plate being adapted to electrically connect the first cell and the second cell; and a second lead plate that is provided so as to span between the second cell and the connected member, the second lead plate being adapted to electrically connect the second cell and the connected member, wherein the first lead plate and the second lead plate are electric resistance welded to the second cell in such a manner that an end of the first lead plate and an end of the second lead plate are spaced apart from each other with a predetermined plate gap therebetween, and only an electric resistance welded portion that is formed by one of a pair of positive and negative electrodes for electric resistance welding is formed between the end of the first lead plate and the second cell, and only an electric resistance welded portion that is formed by the other of the pair of positive and negative electrodes for the electric resistance welding is formed between the end of the second lead plate and the second cell.

According to the present invention, it is possible to provide a method for producing an assembled battery with which electric resistance welding can be performed more efficiently and flexibility in cell layout can be increased.

Brief Description of the Drawings

[Fig. 1] Fig. 1 is a side view showing a schematic configuration of a battery pack according to an embodiment of the present invention.

[Fig. 2] Fig. 2 is a view for use in describing how to produce the battery pack shown in Fig. 1, with cells and a safety device being positioned.

[Fig. 3] Fig. 3 is a view for use in describing how to produce the battery pack shown in Fig. 1, with lead plates being placed on each cell and the safety device.

[Fig. 4] Fig. 4 is a view for use in describing how to produce the battery pack shown in Fig. 1, with electrodes contacting against the lead plates.

[Fig. 5] Fig. 5 is a perspective view showing a contacting step of lead plates in a method of producing the battery pack shown in Fig. 4.

[Fig. 6] Fig. 6 is a side view showing a modified version of a battery pack produced by using a production method according to an embodiment of the present invention.

[Fig. 7] Fig. 7 is a side view showing an assembled battery according to another embodiment of the present invention.

[Fig. 8] Fig. 8 is a graph for use in describing how to determine the minimum value of a gap between a pair of lead plates.

[Fig. 9] Fig. 9 is a diagrammatic representation showing a state where a lead plate and the bottom of a battery case are electric resistance welded.

[Fig. 10] Fig. 10 is a table showing factors such as a material and a plate thickness of lead plates.

[Fig. 11] Fig. 11 is a table showing factors such as a material and a plate thickness of the bottom of a battery case.

[Fig. 12] Fig. 12 is a graph for use in describing how to determine the maximum value of a gap between a pair of lead plates.

[Fig. 13] Fig. 13 is a table for use in assessing a proper value of a gap between a pair of lead plates.

[Fig. 14] Fig. 14 is a side view showing a conventional battery pack.

[Fig. 15] Fig. 15 is a cross-sectional view taken along the line XV-XV in Fig. 14.

Modes for carrying out the Invention

Now, referring to the drawings, an embodiment of the present invention is described. The following embodiment is an example in which the present invention is implemented, and is not intended to limit a technical scope of the present invention.

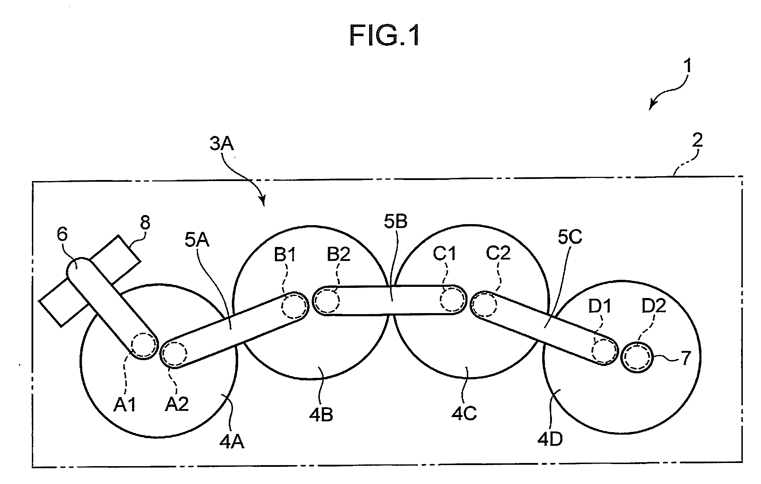

Fig. 1 is a side view showing a schematic configuration of a battery pack 1 according to an embodiment of the present invention.

Referring to Fig. 1, the battery pack 1 comprises an assembled battery 3A, a safety device 8 which has a circuit connected to this assembled battery 3A and controls the circuit when the assembled battery 3A has a trouble, and a container 2 for containing the assembled battery 3A and the safety device 8.

The assembled battery 3A comprises four cells 4A to 4D, lead plates 5A to 5C that electrically connect these cells 4A to 4D, a lead plate 6 that electrically connects the cell 4A and the safety device 8, and a fixed plate 7 fixed to the cell 4D.

The cells 4A to 4D are arranged in series with their centers located on a generally same arc in the side view shown in Fig. 1. More specifically, the center of the cell 4B and the center of the cell 4C are offset in the same direction (up in Fig. 1) relative to the straight line connecting between the center of the cell 4A and the center of the cell 4D. The cells 4A to 4D arranged as described above are connected with each other through the lead plates 5A to 5C to maintain the layout of the cells 4A to 4D.

The lead plate 5A is secured so as to span between the cell 4A and the cell 4B located adjacent to the cell 4A. More specifically, the lead plate 5A is a strip-shaped metal plate and has one end that is electric resistance welded to the cell 4A at one welding position A2 and the other end that is electric resistance welded to the cell 4B at one welding position B1.

The lead plate 5B is secured so as to span between the cell 4B and the cell 4C located adjacent to the cell 4B. More specifically, the lead plate 5B is a strip-shaped metal plate and has one end that is electric resistance welded to the cell 4B at one welding position B2 and the other end that is electric resistance welded to the cell 4C at one welding position C1.

The lead plate 5C is secured so as to span between the cell 4C and the cell 4D located adjacent to the cell 4C. More specifically, the lead plate 5C is a strip-shaped metal plate and has one end that is electric resistance welded to the cell 4C at one welding position C2 and the other end that is electric resistance welded to the cell 4D at one welding position D1.

The lead plate 6 is secured so as to span between the cell 4A and the safety device 8 located adjacent to the cell 4A on the opposite side of the cell 4B. More specifically, the lead plate 6 is a strip-shaped metal plate and has one end that is electric resistance welded to the cell 4A at one welding position A1 and the other end that is electrically connected to the safety device 8 at a connection point which is not shown.

The fixed plate 7 is a circular metal plate and is electric resistance welded to an end surface of the cell 4D at one welding position D2.

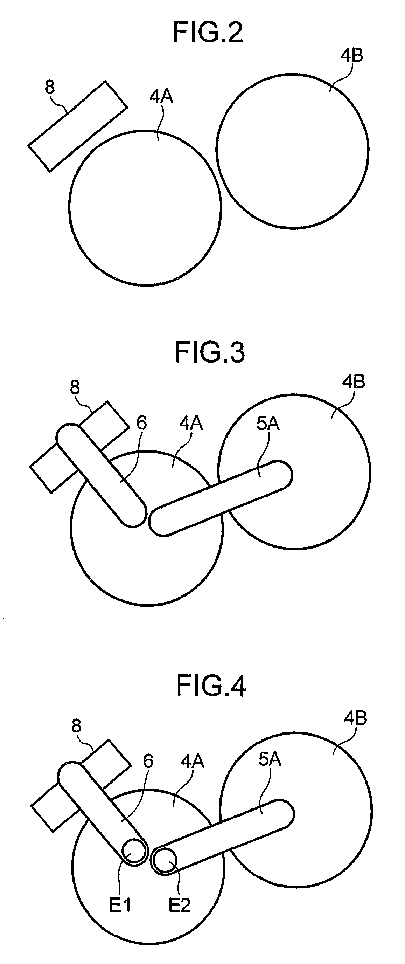

Now, a method for manufacturing the battery pack 1 is described with reference to Figs. 1 to 5. In Figs. 2 to 4, illustrated is a step of connecting the cell 4A, the cell 4B, and the safety device 8 through the lead plate 5A and the lead plate 6, and description of other procedures is omitted.

First, the lead plates 5A to 5C, 6, and the fixed plate 7 that are made of nickel-plated iron are prepared (preparation step). More specifically, in the preparation step, for example, the lead plates 5A to 5C, 6, and the fixed plate 7 are prepared that are formed by punching a metal plate. In addition, in the preparation step, the lead plates 5A to 5C, 6, and the fixed plate 7 may be formed by cutting a metal tape (lead plate component member) extending in a predetermined direction, along the longitudinal direction thereof.

Next, as shown in Figs. 1 and 2, each of the cells 4A to 4D and the safety device 8 are positioned so that they will have a predetermined weld-on positional relationship (positional relationship after completion shown in Fig. 1) (positioning step). More specifically, in the positioning step, the cells 4A to 4D are positioned in such a manner that the surface to be welded (hereinafter, referred to as a "subjected surface") of each of the lead plates 5A to 5C faces up and the subjected surfaces are laid at a similar level. In addition, in the positioning step, the safety device 8 is positioned in such a manner that the subjected surfaces of the lead plates 5A to 5C and the side surface (the surface depicted as a rectangle in Fig. 1) of the safety device 8 are laid at a similar level.

Next, with the lead plates 5A to 5C, 6, and the fixed plate 7 positioned so that they will have a predetermined weld-on positional relationship (positional relationship after completion shown in Fig. 1), the lead plates 5A to 5C, 6, and the fixed plate 7 are held(holding step).

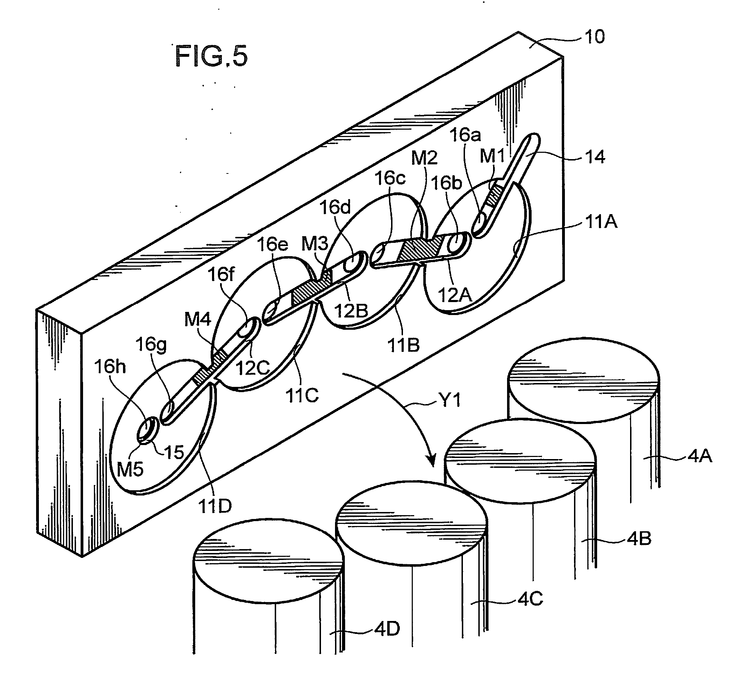

More specifically, in this holding step, a holder 10 as shown in Fig. 5 is used. The holder 10 has cell concave portions 11A to 11D for receiving upper portions of the respective cells 4A to 4D, lead plate concave portions 12A to 12C, and 14 for receiving the lead plates 5A to 5C, and 6, respectively, a fixed plate concave portion 15 for receiving the fixed plate 7, magnet sections (hatched areas in Fig. 5) M1 to M5 that form a part of the bottom surfaces of the lead plate concave portions 12A to 12C, and 14 and the fixed plate concave portion 15, and electrode holes 16a to 16h which are completely passing through the holder from the bottom surfaces of the concave portions 12A to 12C, 14, and 15 to the back side. The cell concave portions 11A to 11C are for aligning the holder 10 relative to the cells 4A to 4D positioned in the positioning step. When the alignment between the holder 10 and the cells 4A to 4D is achieved by other means, the cell concave portions 11A to 11D may be omitted. In addition, the lead plate concave portions 12A to 12C, and 14 and the fixed plate concave portion 15 are arranged at a position corresponding to the weld-on positional relationship of the predetermined lead plates 5A to 5C, 6, and the fixed plate 7. The lead plates 5A to 5C, 6, and the fixed plate 7 are inserted into the concave portions 12A to 12C, 14, and 15, respectively, to be held on the holder 10 by the magnetic force of the magnet sections M1 to M5. The electrode holes 16a to 16h are formed at the positions corresponding to the welding positions A1 to D2, and are holes for causing the electrodes to be electric resistance welded to contact, from the back side, against the lead plates 5A to 5C, 6, and the fixed plate 7 held on the holder 10. In this embodiment, the magnet sections M1 to M5 are used to hold the lead plates 5A to 5C, but mechanical fixture means (not shown) such as claws and suctions may be provided on or in the holder 10 alternatively or in addition to the magnet sections M1 to M5. This makes it possible to hold the lead plates on the holder even when non-magnetic lead plates (such as lead plates made of copper) are used.

After the lead plates 5A to 5C, 6, and the fixed plate 7 are held on the holder 10, as shown in an arrow Y1 in Fig. 5, the holder 10 is put over the cells 4A to 4D. In this way, the lead plates 5A to 5C, 6, and the fixed plate 7 are caused to contact against the subjected surfaces of the cells 4A to 4D (contacting step). More specifically, in this contacting step, the lead plate 5A is laid on the cells 4A and 4B so as to span between the cell 4A and the cell 4B (see Fig. 3). The lead plate 5B is laid on the cells 4B and 4C so as to span between the cell 4B and the cell 4C. The lead plate 5C is laid on the cells 4B and 4C so as to span between the cell 4C and the cell 4D. The lead plate 6 is laid on the cell 4A and the safety device 8 so as to span between the cell 4A and the safety device 8. The fixed plate 7 is laid on the cell 4D. More specifically, in the contacting step, the lead plates 5A to 5C, 6, and the fixed plate 7 are caused to contact against the cells 4A to 4D with a predetermined gap (e.g., a gap equal to or larger than 0.2 mm) between the lead plate 6 and the lead plate 5A, between the lead plate 5A and the lead plate 5B, between the lead plate 5B and the lead plate 5C, and between the lead plate 5C and the fixed plate 7. The reason why the predetermined gap is equal to or larger than 0.2 mm is that a smaller gap would cause discharge between the plates during the electric resistance welding which is described below. The predetermined gap will be described in detail later.

Next, as shown in Figs. 1 and 4, the cells 4A to 4D are electric resistance welded to the lead plates 5A to 5C at the welding positions A1 to C2 (first to third welding steps and connection step). More specifically, by inserting the electrodes E1 and E2 into the electrode holes 16a and 16b, respectively, of the holder 10 in Fig. 5, the pair of electrodes E1 and E2 is caused to contact against the lead plate 5A and the lead plate 6, respectively, from the side opposite to the cell 4A as shown in Fig. 4. With this state, by applying an electric current between the electrodes E1 and E2, the lead plate 5A and the lead plate 6 are electric resistance welded to the cell 4A at the welding positions A1 and A2, respectively. The electric current flows between the lead plate 5A and the lead plate 6 through the cell 4A when the electric current is applied between the lead plate 5A and the lead plate 6 that are caused to contact against the cell 4A with the predetermined gap. Likewise, by inserting the electrodes E1 and E2 into the electrode holes 16c and 16d of the holder 10, the pair of electrodes E1 and E2 is caused to contact against the lead plate 5A and the lead plate 5B, respectively, from the side opposite to the cell 4B. With this state, by applying an electric current between the electrodes E1 and E2, the lead plate 5A and the lead plate 5B are electric resistance welded to the cell 4B at the welding positions B1 and B2, respectively. Furthermore, by inserting the electrodes E1 and E2 into the electrode holes 16e and 16f of the holder 10, the pair of electrodes E1 and E2 is caused to contact against the lead plate 5B and the lead plate 5C, respectively, from the side opposite to the cell 4C. With this state, by applying an electric current between the electrodes E1 and E2, the lead plate 5B and the lead plate 5C are electric resistance welded to the cell 4C at the welding positions C1 and C2, respectively.

Next, as shown in Fig. 1, the cell 4D is electric resistance welded to the lead plate 5C and the fixed plate 7 at the welding positions D1 and D2, respectively (second welding step). More specifically, by inserting the electrodes E1 and E2 into the electrode holes 16g and 16h of the holder 10 shown in Fig. 5, the pair of electrodes E1 and E2 is caused to contact against the lead plate 5C and the fixed plate 7, respectively, from the side opposite to the cell 4D. With this state, by applying an electric current between the electrodes E1 and E2, the lead plate 5C and the fixed plate 7 are electric resistance welded to the cell 4D at the welding positions D1 and D2, respectively.

Next, the lead plate 6 and the safety device 8 are electrically connected to each other (connection step) to produce the assembled battery 3A. Then, this assembled battery 3A is contained in the container 2 to complete the battery pack 1.

It should be noted that the order of connecting (welding) the cells 4A to 4D and the safety device 8 to the lead plates 5A to 5C, 6, and the fixed plate 7 is not limited to the aforementioned order. However it is necessary that the welding at the welding positions A1 and A2 is made simultaneously, welding at the welding positions B1 and B2 is made simultaneously, welding at the welding positions C1 and C2 is made simultaneously, and welding at the welding positions D 1 and D2 is made simultaneously. In addition, welding at the welding positions A1 to D2 can be made simultaneously by using four pairs (eight) electrodes.

As described above, according to the embodiment, the electric current flows between the lead plate 5A and the lead plate 6 that are spaced apart from each other and caused to contact against the cell 4A. Thus, the electric current flows between the lead plate 5A and the lead plate 6 through the cell 4A. In this way, according to the embodiment, the electric current is prevented from flowing between the pair of electrodes E1 and E2 through the lead plate itself. This reduces reactive current that does not contribute electric resistance welding. The same applies between the welding position B1 and the welding position B2, between the welding position C1 and the welding position C2, and between the welding position D1 and the welding position D2.

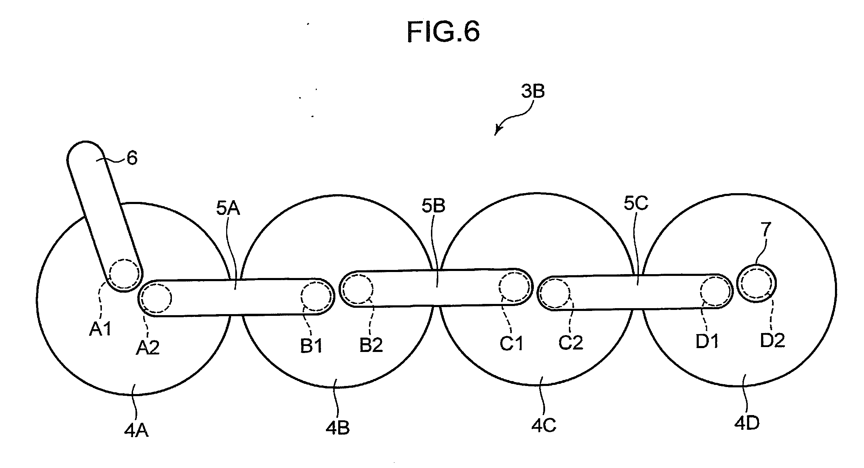

Furthermore, in the embodiment, four lead plates 5A to 5C and 6 are used as the lead plates connecting the cells 4A to 4D and the safety device 8. Unlike the conventional assembled batteries where a single lead plate is used to connect a plurality of cells (see, for example, Fig. 6), the layout of the cells 4A to 4D and the safety device 8 can be varied freely within a range where the lead plates 5A to 5C and 6 can reach, without changing the shape of the lead plates 5A to 5C and 6. For example, without changing the shape of the lead plates 5A to 5C, as shown in Fig. 6, the cells 4A to 4D may be aligned into line to form an assembled battery 3B.

In the embodiment, the lead plates 5A to 5C are caused to contact against the cells 4A to 4D with the lead plates 5A to 5C held by the holder 10 in a predetermined positional relationship. Unlike a case where the lead plates 5A to 5C are caused to contact against the cells 4A to 4D while positioning them, the positioning of the lead plates 5A to 5C is completed in the holding step and then the lead plates 5A to 5C are caused to contact against the cells 4A to 4D. Thus, the lead plates 5A to 5C can easily be caused to contact against the cells 4A to 4D.

In the embodiment, the fixed plate 7 is welded to the cell 4D. Even when the cell 4D is connected only with the cell 4C, the reactive current can be reduced by using the fixed plate 7. More specifically, in the embodiment, the fixed plate 7 and the lead plate 5C are spaced apart from each other and are caused to contact against the cell 4D to flow the electric current between the fixed plate 7 and the lead plate 5C. Accordingly, the electric current flows between the fixed plate 7 and the lead plate 5C through the cell. Thus, according to the embodiment, the electric current is prevented from flowing between the pair of electrodes E1 and E2 through the lead plate itself. This reduces reactive current that does not contribute electric resistance welding.

While the embodiment has been described in conjunction with the welding in which the fixed plate 7 is used, the fixed plate 7 may be omitted. More specifically, with the lead plate 5C put on the cell 4D, one electrode (the electrode E1, by way of example) is caused to contact against the lead plate 5C, and the other electrode (the electrode E2, by way of example)is caused to directly contact against the cell 4D. In this state, it is possible to apply a voltage across the electrodes E1 and E2 to weld the cell 4D and the lead plate 5C. When this welding procedure is employed, it is preferable that the heat capacity of the electrode E2 is larger than the heat capacity of the electrode E1 in order to facilitate separation between the cell 4D and the electrode E2 after welding. More specifically, for example, the diameter of the electrode E2 may be determined to be larger than that of the electrode E1. Alternatively, the electrode E2 may be made of a material having a larger heat capacity than that of the electrode E1. This makes it possible to suppress melting of a part of the cell 4D that is caused to contact against the electrode E2.

While the embodiment employs the lead plates 5A to 5C and 6 made of nickel-plated iron, the lead plates 5A to 5C and 6 made of copper may be employed. Because the lead plates 5A to 5C and 6 made of copper that is a material having a smaller resistance value than the nickel-plated iron is used, it is possible to produce assembled batteries having less internal resistance (losses). The smaller resistance value is disadvantageous in efficiency of generating Joule heat during the electric resistance welding, but in the production method, as described above, the electric current is prevented from flowing through the lead plate itself. This reduces reactive current that does not contribute electric resistance welding. Thus, even when the lead plates 5A to 5C and 6 made of copper are used, the electric resistance welding can be made with a relatively low electric current value.

In addition, in the preparation step, the lead plates 5A to 5C, 6, and the fixed plate 7 can be prepared by cutting the metal tape (lead plate component member) extending in a predetermined direction, along the longitudinal direction thereof. This reduces the kinds of components and parts to be prepared and also reduces costs, as compared with a case where the lead plates 5A to 5C, 6, and the fixed plate 7 are individually prepared by using, for example, press working.

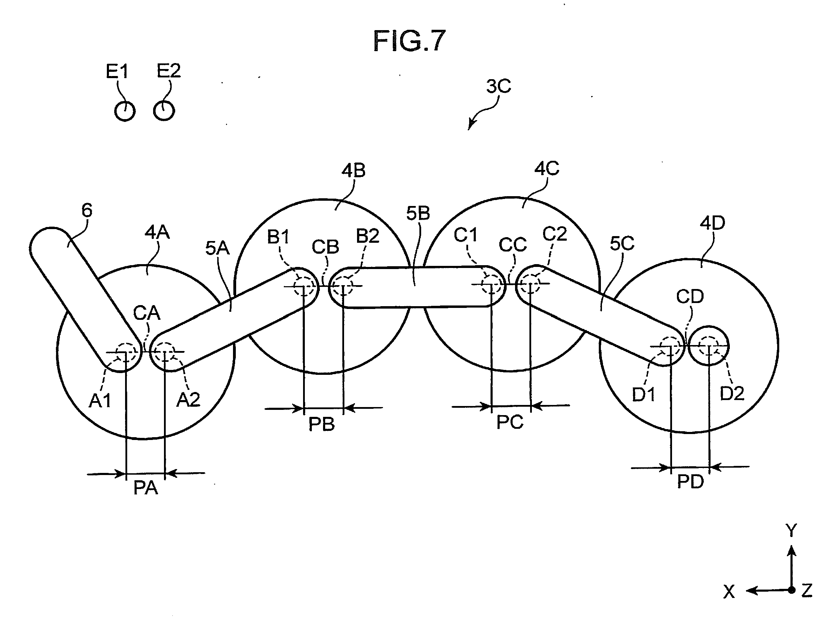

It should be noted, in the embodiment, the positional relationship between the welding positions A1 and A2, the positional relationship between the welding positions B1 and B2, the positional relationship between the welding positions C1 and C2, and the positional relationship between the welding positions D 1 and D2 are different positional relationships from each other. Now, as shown in Fig. 7, the electric resistance welding can be made more efficiently by using identical positional relationship.

Fig. 7 is a side view showing an assembled battery 3C according to another embodiment of the present invention. In Fig. 7, the longitudinal direction of the rod-shaped electrodes E1 and E2 lies in the direction of the Z-axis, and the plane perpendicular to this Z-axis is defined as an X-Y plane.

Referring to Fig. 7, in the assembled battery 3C, a pitch PA between the welding positions A1 and A2, a pitch PB between the welding positions B1 and B2, a pitch PC between the welding positions C1 and C2, and a pitch PD between the welding positions D1 and D2 are identical to each other. In addition, in the assembled battery 3C, an imaginary line CA connecting between the centers of the welding positions A1 and A2, an imaginary line CB connecting between the centers of the welding positions B1 and B2, an imaginary line CC connecting between the centers of the welding positions C1 and C2, and an imaginary line CD connecting between the centers of the welding positions D1 and D2 are in parallel to each other. Thus, this assembled battery 3C can be electric resistance welded in a manner described below.

First, the electrodes E1 and E2 are supported in such a manner that the gap between the electrodes E1 and E2 for the electric resistance welding is identical to the pitches PA to PD, and that the line segment connecting between the centers of the electrodes E1 and E2 is in parallel to the imaginary lines CA to CD (supporting step).

Next, in the contacting step, the lead plates 5A to 5C, 6, and the fixed plate 7 are caused to contact against the cells 4A to 4D while positioning, considering the relative positional relationship and the gap between the electrodes E1 and E2 supported in the supporting step. In other words, the lead plates 5A to 5C, 6, and the fixed plate 7 are caused to contact against the cells 4A to 4D in such a manner that the corresponding lead plates 5A to 5C and 6 or the fixed plate 7 are positioned on the welding positions A1 to D2.

Next, positioning on the welding positions A1 and A2 is made by displacing the electrodes E1 and E2 supported in the supporting step on the X-Y plane without rotating the electrodes E1 and E2 around the Z-axis relative to the lead plates 5A to 5C, 6, and the fixed plate 7, and the electrodes E1 and E2 are displaced in the direction of the Z-axis to cause them to contact against the lead plates 5A and 6. In this state, the electric resistance welding can be made at the welding positions A1 and A2.

Next, the electrodes E1 and E2 are displaced in the direction of the Z-axis to separate them from the lead plates 5A and 6. The electrodes E1 and E2 are then displaced on the X-Y plane. In this way, the electrodes E1 and E2 are positioned at the welding positions B1 and B2, respectively, and the electrodes E1 and E2 are displaced in the direction of the Z-axis to cause them to contact against the lead plates 5A and 5B, respectively. With this state, the resistance welding at the welding positions B1 and B2 can be made.

Likewise, the electrodes E1 and E2 can be displaced for the welding positions C1 and C2 and then for the welding positions D1 and D2.

In this embodiment, the electric resistance welding can be made while the electrodes E1 and E2 are supported at the same positions for the plurality of welding positions A1 to D2, by using these two electrodes E1 and E2. Thus, the electric resistance welding can be made efficiently in comparison with a case where the positional relationship and the space of the electrodes E1 and E2 are changed according to the welding position.

It should be noted that, the embodiment describes the way to displace the electrodes E1 and E2 relative to the lead plates 5A to 5C, 6, and the fixed plate 7 (the cells 4A to 4C and the safety device 8). However, it is not limited thereto. For example, the lead plates 5A to 5C, 6, and the fixed plate 7 may be displaced relative to the electrodes E1 and E2.

In addition, the embodiment describes the way to weld the pair of positive and negative electrodes E1 and E2 each at one position. However, the tip of each of the electrodes E1 and E2 may be divided and the welding may be made at two or more positions for each electrode. This makes it possible to weld between the lead plates 5A to 5C, 6, and the fixed plate 7 and the cells 4A to 4D at several positions, restricting rotation of the lead plates 5A to 5C, 6, and the fixed plate 7 and the cells 4A to 4D.

Now, detailed description is made about a predetermined gap between the lead plates formed in the contacting step. It should be noted that, in the embodiment, the gaps between the lead plate 6 and the lead plate 5A, between the lead plate 5A and the lead plate 5B, between the lead plate 5B and the lead plate 5C, and between the lead plate 5C and the fixed plate 7 have a same target value. Thus, the description is made for the gap formed between the lead plate 6 and the lead plate 5A, as an example.

First, the lower limit value of the predetermined gap is described. The lower limit value of the predetermined gap is defined as the gap to prevent any discharge between the lead plate 6 and the lead plate 5A. More specifically, in the embodiment, the lower limit value of the predetermined gap falls within a range not smaller than 0.01 but not larger than 0.15 mm. How to determine this is described below.

Whether or not arc occurs between the parallel electrodes (lead plates) can be defined as the following Equation 1, according to the Paschen's Law.

[Equation 1]

$$V = f(pd)$$

More specifically, voltage V applied across the electrodes is described as a function of a product of gas pressure p (Torr) and a gap distance d (m) between the electrodes. In the embodiment, the gas pressure p is constant under the atmospheric conditions, so that the Equation 1 can be expressed as the following Equation 2.

[Equation 2]

$$V = Cd \fallingdotseq 1.0 \times d$$

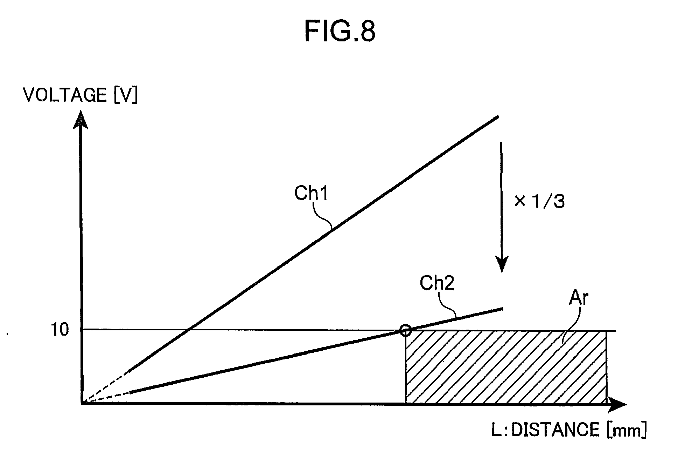

More specifically, the voltage V can be given by a product of a proportionality constant C and the gap distance d between the electrodes. The proportionality constant C is equal to 3 kV/mm under dry air conditions. This means that, under dry air conditions, the discharge can be prevented in a range lower than a straight line Ch1 shown in Fig. 8 which is defined by 3(V/$\mu$m) $\times$ d. Here, it is assumed that the proportionality constant C under welding conditions is 1/3 of the aforementioned proportionality constant C under dry air conditions, then the voltage V can be defined as 1 (V/$\mu$m) $\times$ d according to the Equation 2. In other words, under welding conditions, the discharge can be prevented in a range lower than a straight line Ch2 shown in Fig. 8. When a voltage V of 10 V is applied across the electrodes, it is possible to prevent the discharge between the electrodes (lead plates) with the gap distance d between the electrodes of equal to or larger than 10 $\mu$m (0.01 mm). This indicates that the discharge can be prevented within a range Ar shown in Fig. 8.

When a lead plate used is punched out of a metal plate, raised burr may be created at a side edge surface of the lead plate. An allowable value of the burr height (tolerance) is about 1/3 of the thickness of the lead plate. For example, when the thickness of the lead plate is 0.15 mm, the allowable value of the burr height is 0.05 mm. Thus, when the lead plates forming the pair are opposed to each other, there is a possibility that a burr of 0.1 mm exists on the inner side of each lead plate. Taking the aforementioned tolerance into consideration, it is more preferable that the gap between the lead plates (the gap distance d between the electrodes) is equal to or larger than 0.15 mm.

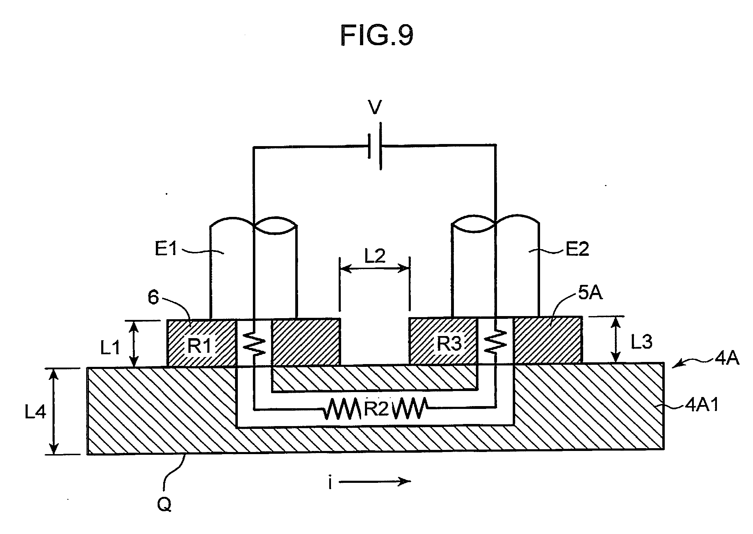

Next, the upper limit value of the predetermined gap is described. The upper limit value of the predetermined gap is defined as a gap to achieve, in the welding step, a heat amount Q with which the bottom of an iron battery case 4A1 (see Fig. 9: welded portion) can be welded that is provided on the cell 4A to weld the lead plate 6 and the lead plate 5A. The heat amount Q obtained in the welding step depends on the total resistance value of the lead plate 6 and 5A as well as the bottom of the battery case 4A1. Accordingly, the resistance value of each part is described first.

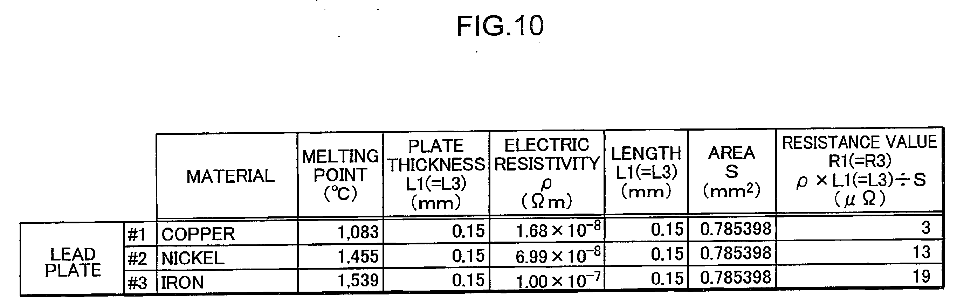

As shown in Fig. 9, let the thickness of the lead plate 6 be L1, and the resistance value of the lead plate 6 be R1. In addition, let the thickness of the lead plate 5A be L3 (= L1), and the resistance value of the lead plate 5A be R3 (= R1). In this case, the resistance values R1 (= R3) of the lead plates 6 and 5A is calculated as shown in Fig. 10. More specifically, Fig. 10 shows the resistance values R1 (= R3) of a copper lead plate #1, a nickel lead plate #2, and an iron lead plate #3. In Fig. 10, an area S is an area (($\pi$/4) $\times$ 1$^2$) to form a nugget having a diameter of about 1 mm.

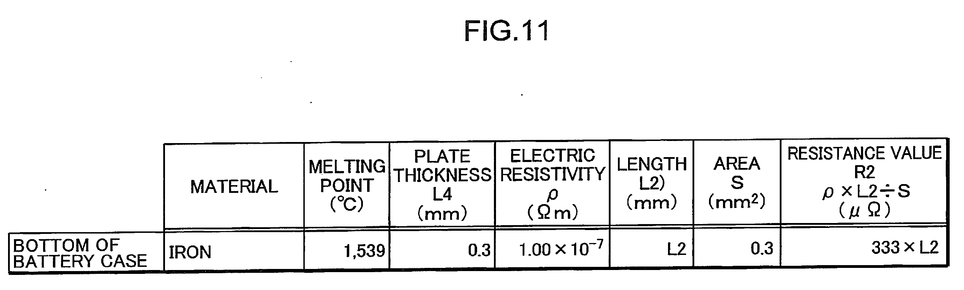

In addition, as shown in Fig. 9, let the thickness of the bottom of the battery case 4A1 be L4, and the resistance value of the bottom of the battery case 4A1 be R2. In addition, let the gap between the lead plates 6 and 5A be L2. In this case, the resistance value R2 of the bottom of the battery case 4A1 is calculates as shown in Fig. 11. More specifically, in Fig. 11, the resistance value R2 is given for the bottom of the iron battery case 4A1. It should be noted that, in Fig. 11, the area S is a cross-sectional area (L4 $\times$ 1) to form a nugget having a diameter of about 1 mm.

As shown in Figs. 10 and 11, the thickness of the lead plates (L1, L2) is very small (0.15 mm). Thus, the resistance value R1 (R3) of the lead plates 6 and 5A is significantly smaller than the resistance value R3 of the bottom of the battery case 4A1. More specifically, when the gap L2 is equal to or larger than 3 mm, then the resistance value R1 (R3) is not larger than 2% of the resistance value R2. Accordingly, the total resistance value (R1 + R2 + R3) can be approximated by the resistance value R2 of the bottom of the battery case 4A1. Now, how to determine the upper limit value of the predetermine gap is described on the assumption that this condition is satisfied.

Referring to Fig. 9, the heat amount Q transferred to the bottom of the battery case 4A1 when the voltage V is applied across the electrodes E1 and E2 can be given by the following Equation 3.

[Equation 3]

$$Q = i^2 R2 \Delta t = \left(\frac{V}{R1+R2+R3}\right)^2 R2 \Delta t$$

Wherein $\Delta$t is a time interval (ms) during which the voltage V is continuously applied. As described above, the total resistance value (R1 + R2 + R3) can be approximated by the resistance value R2 of the bottom of the battery case 4A1. Thus, the Equation 3 can be replaced by the following Equation 4.

[Equation 4]

$$Q \fallingdotseq \frac{V^2 \Delta t}{R2} = \frac{V^2 \Delta t}{333 \times 10^{-6} L2}$$

Using this Equation 4, the heat amount required to form a nugget of 1 mm in diameter and 0.1 mm in depth in the bottom of the battery case 4A1 can be given by the following Equation 5.
[Equation 5]

$$Q = \frac{V^2 \Delta t}{333 \times 10^{-6} L2} \times \frac{0.1}{L2}$$

$$= \frac{V^2 \Delta t}{333 \times 10^{-5} L2^2}$$

$$= \frac{3 \times 10^2 \times V^2 \times \Delta t}{L2^2}$$

By substituting the following three different voltage values (8V, 10V, and 12V) into the aforementioned Equation 4, the following Equations 6 to 8 can be obtained. In the Equations 5 to 7, the $\Delta$t has a constant value of 2.25 ms.
[Equation 6]

$$V = 8 (V), \quad \Delta t = 2.25 (ms)$$

$$Q = \frac{43}{L2^2}$$

[Equation 7]

$$V = 10 (V), \quad \Delta t = 2.25 (ms)$$

$$Q = \frac{68}{L2^2}$$

[Equation 8]

$$V=12(V), \quad \Delta t = 2.25(ms)$$

$$Q = \frac{97}{L2^2}$$

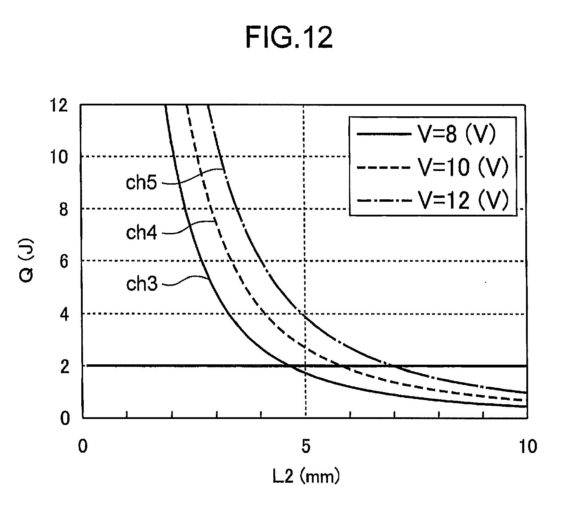

As apparent from these Equations 6 to 8, the heat amount Q is defined as a function of L2. More specifically, in Fig. 12, the Equation 6 is given by a curved line Ch3, the Equation 7 is given by a curved line Ch4, and the Equation 8 is given by a curved line Ch5. In order to form a nugget of 1 mm in diameter and 0.1 mm in depth in the bottom of the battery case 4A1, the heat amount of about 2 J is required. This means that a region near the lead plates 6 and 5A of the bottom of the battery case 4A1 can be molten, with a gap smaller than L2 corresponding to the cross point between the curved lines Ch3 to Ch5 and the heat amount 2 (J) in Fig. 12. More specifically, when the voltage V is equal to 8 (V), it is about 5 (mm). When the voltage V is equal to 10 (V), it is about 6 (mm). When the voltage V is equal to 12 (V), it is about 7 (mm). Accordingly, the region near the lead plates 6 and 5A of the bottom of the battery case 4A1 can be molten with at least L2 of not larger than 7 (mm).

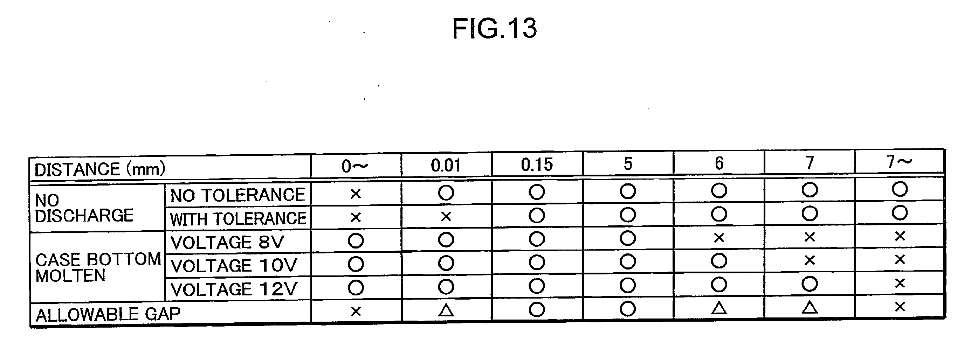

Now, referring to Fig. 13, the assessment of the gap L2 is summarized.

The lower limit value of the gap L2 has the smallest value of 0.01 (mm) that is obtained when no tolerance is considered. On the other hand, the upper limit value of the gap L2 has the largest value of 7 (mm) when the voltage applied across the electrodes E1 and E2 is equal to 12 (V). This indicates that $0.01 \leq L2 \leq 7$ can be used under conditions where a voltage equal to or higher than 12 (V) is applied without considering the tolerance. When the gap L2 is determined within this range, the electric resistance welding can be certainly achieved by using a lead plate in which no tolerance due to, for example, burr should be considered and by applying a higher voltage.

In addition, the lower limit value of the gap L2 is equal to 0.15 (mm) when the tolerance is taken into consideration. On the other hand, the upper limit value of the gap L2 is equal to 5 (mm) when the voltage of 8 (V) is applied across the electrodes E1 and E2. Accordingly, $0.15 \leq L2 \leq 5$ can be used under conditions where a voltage equal to or higher than 8 (V) is applied while considering the tolerance. The gap L2 defined within this range allows to certainly achieve the electric resistance welding at a lower voltage, even when a lead plate punched out of a metal plate is used.

It should be noted that the aforementioned specific embodiment mainly includes the invention having the following configuration.

In order solve the aforementioned problems, the present invention provides a method for producing an assembled battery having a first cell, a second cell electrically connected to the first cell, and at least one connected member electrically connected to the first cell and the second cell, comprising: a preparation step of preparing a first lead plate that is adapted to electrically connect the first cell and the second cell, and a second lead plate that is adapted to electrically connect the second cell and the connected member; an contacting step of causing one end of the first lead plate and one end of the second lead plate to contact against the second cell, in such a manner that the one end of the first lead plate and the one end of the second lead plate are spaced apart from each other with a predetermined first gap therebetween; a first welding step of electric resistance welding the first lead plate and the second lead plate to the second cell by means of causing electrodes to contact, from the side opposite to the second cell, against the one end of the first lead plate and the one end of the second lead plate, respectively, which have contacted against the second cell, and applying electric current between the electrodes; a second welding step of welding the other end of the first lead plate and the first cell; and a connection step of electrically connecting the other end of the second lead plate and the at least one connected member.

In the present invention, the electric current is applied between the first lead plate and the second lead plate that are separated from each other and caused to contact against the second cell. Therefore, the electric current flows between the first lead plate and the second lead plate through the cell. Thus, according to the present invention, the electric current is prevented from flowing through the lead plate itself between the pair of electrodes. This reduces reactive current that does not contribute electric resistance welding.

Furthermore, in the present invention, two lead plates (the first lead plate and the second lead plate) are employed as the lead plates for connecting the first cell, the second cell, and the connected member. In comparison to the conventional assembled batteries where a single lead plate is used to connect a plurality of cells, the layout of the cells and the connected member can be varied freely within a range where the lead plates can reach, without changing the shape of the lead plates.

It should be noted that, the "connected member" as used in the present invention is not limited to the components other than the cells, such as the safety device, and a cell is also included when such a cell is provided in addition to the first cell and the second cell.

In the production method, it is preferable that the method further comprises a positioning step of positioning the first cell, the second cell, and the at least one connected member, in a predetermined positional relationship as a weld-on positional relationship of the first lead plate and the second lead plate; and a holding step of holding the first lead plate and the second lead plate with the first lead plate and the second lead plate being positioned in the predetermined positional relationship as the weld-on positional relationship relative to the first cell, the second cell, and the at least one connected member, and wherein, in the contacting step, the first lead plate and the second lead plate are caused to contact against the second cell while keeping the positional relationship held in the holding step.

According to this production method, unlike a case where the first lead plate and the second lead plate are caused to contact against the second cell while positioning these lead plates, the positioning of the first lead plate and the second lead plate is completed in the holding step and then these lead plates are caused to contact against the second cell. Thus, the lead plates can easily be caused to contact against the second cell.

In the production method, it is preferable that, in the contacting step, the first gap is determined as a gap to achieve, in the first welding step, a heat amount with which a second cell welded portion can be molten, the second cell welded portion being provided on the second cell to weld the first lead plate and the second lead plate.

In this production method, the first gap is determined as a gap to achieve the heat amount with which the second cell welded portion can be molten. The total heat amount obtained in the first welding step depends on the total resistance value of the first lead plate, the second cell welded portion, and the second lead plate through which the electric current flows. The total resistance value is proportional to the length of the path through which the electric current flows, that is, the sum of the thickness of the first lead plate, the size of the first gap, and the thickness of the second lead plate. The thickness of each lead plate is very small. Thus, the size of the first gap is relatively larger than the thickness of each lead plate. This means that the size of the first gap significantly affects the total resistance value. Accordingly, by adjusting the first gap as in the case of the production method, the heat amount obtained in the first welding step can be determined efficiently.

In the production method, it is preferable that, in the contacting step, the first gap is determined as a gap that is not larger than a size within a range between 5 mm and 7 mm.

According to this production method, the upper limit value of the first gap can be determined within a range from the gap (7 mm) to achieve the necessary heat amount with the voltage value of 8 V to the gap (5 mm) to achieve the necessary heat amount with the voltage value of 12 V, under normal welding conditions (e.g., the voltage is applied across the electrodes for about 2 ms).

In the production method, it is preferable that, in the contacting step, the first gap is determined as a gap to prevent discharge between one end of the first lead plate and one end of the second lead plate.

According to this production method, the first gap is determined as a minimum gap to prevent discharge between the lead plates, allowing production of a compact assembled battery.

In the production method, it is preferable that, in the contacting step, the first gap is determined as a gap that is equal to or larger than a size within a range between 0.01 mm and 0.15 mm.

According to this production method, the lower limit value of the first gap can be determined within a range from the gap (0.01 mm) to prevent the discharge when each lead plate has the dimensions exactly as designed under normal welding conditions (atmospheric conditions) to the gap (0.15 mm) to prevent the discharge when the tolerance (e.g., 0.05 mm for each lead plate) during the production of the lead plates is considered.

In the production method, it is preferable that, in the preparation step, a fixed plate that is fixed to the first cell is further prepared; in the contacting step, the fixed plate and the other end of the first lead plate are caused to contact against the first cell in such a manner that the fixed plate and the other end of the first lead plate are spaced apart from each other with a predetermined second gap therebetween; and in the second welding step, the electrodes are caused to contact, from the side opposite to the first cell, against the fixed plate and the other end of the first lead plate, respectively, which have contacted against the first cell, and the electric current is applied to the electrodes to thereby electric resistance weld the fixed plate and first lead plate to the first cell.

According to this production method, when nothing other than the second cell is to be connected to the first cell, i.e., when there is no corresponding lead plate to be matched with the first lead plate, the reactive current can be reduced as in the case of the welding step by means of preparing the fixed plate. More specifically, in the production method, the fixed plate and the first lead plate are caused to contact against the first cell with a gap therebetween, and the electric current is applied between the fixed plate and the first lead plate. As a result, the electric current flows between the fixed plate and the first lead plate through the cell. Thus, according to the production method, the electric current is prevented from flowing through the lead plate itself between the pair of electrodes. This reduces reactive current that does not contribute electric resistance welding.

In the production method, it is preferable that, in the contacting step, the second gap is determined as a gap to achieve, in the second welding step, a heat amount with which a first cell welded portion can be molten, the first cell welded portion being provided on the first cell to weld the fixed plate and the first lead plate.

In this production method, the second gap is determined as a gap to achieve the heat amount with which the first cell welded portion can be molten. The total heat amount obtained in the second welding step depends on the total resistance value of the fixed plate, the first cell welded portion, and the first lead plate through which the electric current flows. The total resistance value is proportional to the length of the path through which the electric current flows, that is, the sum of the thickness of the fixed plate, the size of the second gap, and the thickness of the first lead plate. The thickness of each of the fixed plate and the first lead plate is very small. Thus, the size of the second gap is relatively larger than the thickness of each of the fixed plate and the first lead plate. This means that the size of the second gap significantly affects the total resistance value. Accordingly, by adjusting the second gap as in the case of the production method, the heat amount obtained in the second welding step can be determined efficiently.

In the production method, it is preferable that, in the contacting step, the second gap is determined as a gap that is not larger than a size within a range between 5 mm and 7 mm.

According to this production method, the upper limit value of the second gap can be determined within a range from the gap (7 mm) to achieve the necessary heat amount with the voltage value of 8 V to the gap (5 mm) to achieve the necessary heat amount with the voltage value of 12 V, under normal welding conditions (e.g., the voltage is applied across the electrodes for about 2 ms).

In the production method, it is preferable that, in the contacting step, the second gap is determined as a gap to prevent discharge between the fixed plate and the other end of the first lead plate.

According to this production method, the second gap is determined as a minimum gap to prevent discharge between the fixed plate and the first lead plate, allowing production of a compact assembled battery.

In the production method, it is preferable that, in the contacting step, the second gap is determined as a gap that is equal to or larger than a size within a range between 0.01 mm and 0.15 mm.

According to this production method, the lower limit value of the second gap can be determined within a range from the gap (0.01 mm) to prevent the discharge when each of the fixed plate and the first lead plate has the dimensions exactly as designed under normal welding conditions (atmospheric conditions) to the gap (0.15 mm) to prevent the discharge when the tolerance (e.g., 0.05 mm for each of the fixed plate and the first lead plate) during the production of the fixed plate and the first lead plate is considered.

In the production method, it is preferable that, the connected member includes a third cell and a fourth cell; in the preparation step, a third lead plate for electrically connecting the third cell and the fourth cell is prepared; in the contacting step, the other end of the second lead plate and one end of the third lead plate are caused to contact against the third cell in such a manner that the other end of the second lead plate and the one end of the third lead plate are spaced apart from each other with a predetermined third gap therebetween; and in the connection step, the electrodes are caused to contact, from the side opposite to the third cell, against the other end of the second lead plate and the one end of the third lead plate which have contacted the third cell, and the electric current is applied to the electrodes to thereby electric resistance weld the second lead plate and the third lead plate to the third cell; the method further comprising a third welding step of welding the other end of the third lead plate and the fourth cell.

According to this method, when the first to fourth cells are connected by using the first to third lead plates, the reactive current can be reduced at a welding position for the second cell as well as at a welding position for the third cell.

In the production method, the method further comprises a supporting step of supporting a pair of rod-shaped electrodes in such a manner that the electrodes are spaced apart from each other with a gap corresponding to the first gap and the third gap therebetween; in the contacting step, one end of the first lead plate and one end of the second lead plate are caused to contact against the second cell and the other end of the second lead plate and one end of the third lead plate are caused to contact against the third cell, according to the positional relationship and the gap between the rod-shaped electrodes supported in the supporting step; and the first welding step and the third welding step are successively performed by displacing, on a plane perpendicular to the longitudinal direction of the rod-shaped electrodes, the relative position between the rod-shaped electrodes supported in the supporting step and the first lead plate, the second lead plate, and the third lead plate without displacing the relative position around an axis that is parallel to the longitudinal direction of the rod-shaped electrodes, and by causing separation and contact between the rod-shaped electrodes and the first lead plate, the second lead plate, and the third lead plate in the longitudinal direction of the rod-shaped electrodes.

According to this method, for example, in the contacting step, the lead plates on the X-Y plane (the plane perpendicular to the longitudinal direction of the rod-shaped electrode) and the rod-shaped electrodes supported in the supporting step are displaced in the X-Y direction to position the rod-shaped electrodes at the welding positions of the respective lead plates, and then the rod-shaped electrodes and the lead plates are contacted and separated to and from in the direction of the Z-axis (the longitudinal direction of the rod-shaped electrode). Thus, the first welding step and the third welding step can be performed successively.

In the method, the expression "according to the positional relationship and the gap between the rod-shaped electrodes" means that the lead plates are positioned according to the positional relationship and the gap between the rod-shaped electrodes in such a manner that the rod-shaped electrodes can be positioned on the one end of the first lead plate and one end of the second lead plate, respectively, and the rod-shaped electrodes can be positioned on the other end of the second lead plate and one end of the third lead plate, respectively, by displacing the relative position between the rod-shaped electrodes and the lead plates on a plane perpendicular to the longitudinal direction of the rod-shaped electrodes without displacing them around an axis that is parallel to the longitudinal direction of the rod-shaped electrodes.

In the production method, it is preferable that, in the contacting step, the third gap is determined as a gap to achieve, in the connection step, a heat amount with which a third cell welded portion can be molten, the third cell welded portion being provided on the third cell to weld the second lead plate and the third lead plate.

In this production method, the third gap is determined as a gap to achieve the heat amount with which the third cell welded portion can be molten. The total heat amount obtained in the connection step depends on the total resistance value of the second lead plate, the third cell welded portion, and the third lead plate through which the electric current flows. The total resistance value is proportional to the length of the path through which the electric current flows, that is, the sum of the thickness of the second lead plate, the size of the third gap, and the thickness of the third lead plate. The thickness of each lead plate is very small. Thus, the size of the third gap is relatively larger than the thickness of each lead plate. This means that the size of the third gap significantly affects the total resistance value. Accordingly, by adjusting the third gap as in the case of the production method, the heat amount obtained in the connection step can be determined efficiently.

In the production method, it is preferable that, in the contacting step, the third gap is determined as a gap that is not larger than a size within a range between 5 mm and 7 mm.

According to this production method, the upper limit value of the third gap can be determined within a range from the gap (7 mm) to achieve the necessary heat amount with the voltage value of 8 V to the gap (5 mm) to achieve the necessary heat amount with the voltage value of 12 V, under normal welding conditions (e.g., the voltage is applied across the electrodes for about 2 ms).

In the production method, it is preferable that, in the contacting step, the third gap is determined as a gap to prevent discharge between the other end of the second lead plate and one end of the third lead plate.

According to this production method, the third gap is determined as a minimum gap to prevent discharge between the lead plates, allowing production of a compact assembled battery.

In the production method, it is preferable that, in the contacting step, the third gap is determined as a gap that is equal to or larger than a size within a range between 0.01 mm and 0.15 mm.

According to this production method, the lower limit value of the third gap can be determined within a range from the gap (0.01 mm) to prevent the discharge when each lead plate has the dimensions exactly as designed under normal welding conditions (atmospheric conditions) to the gap (0.15 mm) to prevent the discharge when the tolerance (e.g., 0.05 mm for each lead plate) during the production of the lead plates is considered.

In the production method, it is preferable that, in the preparation step, the first lead plate and the second lead plate are prepared, both of which are made of copper.

In this production method, for example, lead plates made of copper that is a material having a smaller resistance value than the nickel-plated iron is used. Thus, it is possible to produce assembled batteries having less internal resistance (losses). The smaller resistance value is disadvantageous in efficiency of generating Joule heat during the electric resistance welding. However, in the production method, the electric current is prevented from flowing through the lead plate itself. This reduces reactive current that does not contribute electric resistance welding. Thus, even when the lead plates made of copper are used, the electric resistance welding can be made with a relatively low electric current value.

In the production method, it is preferable that, in the preparation step, the first lead plate and the second lead plate are prepared by cutting a lead plate component member extending in a predetermined direction, along the longitudinal direction thereof.

In this production method, two lead plates (the first lead plate and the second lead plate) can be prepared by using the lead plate component member. This reduces the kinds of components and parts to be prepared and also reduces costs, as compared with a case where the lead plates are individually prepared by using, for example, press working. Furthermore, as in the production method, when the lead plates are prepared by cutting the lead plate component member, it is possible to quickly respond to a design change in length of the lead plate(s).

In addition, the present invention provides an assembled battery produced by using the production method.

Moreover, the present invention provides an assembled battery having a first cell, a second cell electrically connected to the first cell, and a connected member electrically connected to the first cell and the second cell, comprising: a first lead plate that is provided so as to span between the first cell and the second cell, the first lead plate being adapted to electrically connect the first cell and the second cell; and a second lead plate that is provided so as to span between the second cell and the connected member, the second lead plate being adapted to electrically connect the second cell and the connected member, wherein the first lead plate and the second lead plate are electric resistance welded to the second cell in such a manner that an end of the first lead plate and an end of the second lead plate are spaced apart from each other with a predetermined plate gap therebetween, and only an electric resistance welded portion that is formed by one of a pair of positive and negative electrodes for electric resistance welding is formed between the end of the first lead plate and the second cell, and only an electric resistance welded portion that is formed by the other of the pair of positive and negative electrodes for the electric resistance welding is formed between the end of the second lead plate and the second cell.

In the assembled battery according to the present invention, it is possible to provide an assembled battery with which reactive current can be reduced and flexibility in cell layout can be increased.

More specifically, in the assembled battery according to the present invention, the lead plates are electric resistance welded to the second cell in such a manner that the end of the first lead plate and the end of the second lead plate are spaced apart from each other with a predetermined gap therebetween. Furthermore, an electric resistance welded portion is formed by one of a pair of positive and negative electrodes between the end of the first lead plate and the second cell, and an electric resistance welded portion is formed by the other of the pair of positive and negative electrodes between the end of the second lead plate and the second cell. Thus, upon the production of the assembled battery according to the present invention, the electric resistance welding can be made by applying electric current between the first lead plate and the second lead plate which are spaced apart from each other and are caused to contact against the second cell. In this electric resistance welding, the electric current flows between the first lead plate and the second lead plate through the second cell. Therefore, the assembled battery according to the present invention is made by using the production method in which the electric current is prevented from flowing between the pair of electrodes through the lead plate itself. This reduces reactive current that does not contribute electric resistance welding in the production procedure.

Furthermore, in the assembled battery according to the present invention, two lead plates (the first lead plate and the second lead plate) are employed as the lead plates for connecting the first cell, the second cell, and the connected member. In comparison to the conventional assembled batteries where a single lead plate is used to connect a plurality of cells, the layout of the cells and the connected member can be varied freely within a range where the lead plates can reach, without changing the shape of the lead plates.

It should be noted that, the "connected member" as used in the present invention is not limited to the components other than the cells, such as the safety device, and a cell is also included when such a cell is provided in addition to the first cell and the second cell.

Industrial Applicability

According to the present invention, it is possible to provide a method for producing an assembled battery with which electric resistance welding can be performed more efficiently and flexibility in cell layout can be increased.

Explanation of Reference Numerals

| | |
|---|---|
| E1, E2 | electrodes |
| L2 | gap |
| Q | heat amount |
| R1 to R3 | resistance values |
| 1 | battery pack |
| 3A to 3C | assembled batteries |
| 4A to 4D | cells |
| 4A1 | bottom of the battery case (an example of a cell welded portion) |
| 5A to 5C | lead plates |
| 6 | lead plate |
| 7 | fixed plate |
| 8 | safety device |

**Claims**

1. A method for producing an assembled battery having a first cell, a second cell electrically connected to the first cell, and at least one connected member electrically connected to the first cell and the second cell, comprising:

    a preparation step of preparing a first lead plate that is adapted to electrically connect the first cell and the second cell, and a second lead plate that is adapted to electrically connect the second cell and the connected member;

an contacting step of causing one end of the first lead plate and one end of the second lead plate to contact against the second cell, in such a manner that the one end of the first lead plate and the one end of the second lead plate are spaced apart from each other with therebetween;

a first welding step of electric resistance welding the first lead plate and the second lead plate to the second cell by means of causing electrodes to contact, from the side opposite to the second cell, against the one end of the first lead plate and the one end of the second lead plate, respectively, which have contacted against the second cell, and applying electric current between the electrodes;

a second welding step of welding the other end of the first lead plate and the first cell; and

a connection step of electrically connecting the other end of the second lead plate and the at least one connected member.

2. The method for producing an assembled battery according to Claim 1, further comprising:

a positioning step of positioning the first cell, the second cell, and the at least one connected member, in a predetermined positional relationship as a weld-on positional relationship of the first lead plate and the second lead plate; and

a holding step of holding the first lead plate and the second lead plate with the first lead plate and the second lead plate being positioned in the predetermined positional relationship as the weld-on positional relationship relative to the first cell, the second cell, and the at least one connected member, and wherein:

in the contacting step, the first lead plate and the second lead plate are caused to contact against the second cell while keeping the positional relationship held in the holding step.

3. The method for producing an assembled battery according to Claim 1 or 2, wherein, in the contacting step, the first gap is determined as a gap to achieve, in the first welding step, a heat amount with which a second cell welded portion can be molten, the second cell welded portion being provided on the second cell to weld the first lead plate and the second lead plate.

4. The method for producing an assembled battery according to Claim 3, wherein, in the contacting step, the first gap is determined as a gap that is not larger than a size within a range between 5 mm and 7 mm.

5. The method for producing an assembled battery according to Claim 1, wherein, in the contacting step, the first gap is determined as a gap to prevent discharge between one end of the first lead plate and one end of the second lead plate.

6. The method for producing an assembled battery according to Claim 5, wherein, in the contacting step, the first gap is determined as a gap that is equal to or larger than a size within a range between 0.01 mm and 0.15 mm.

7. The method for producing an assembled battery according to Claim 1 or 2, wherein:

in the preparation step, a fixed plate that is fixed to the first cell is further prepared;

in the contacting step, the fixed plate and the other end of the first lead plate are caused to contact against the first cell in such a manner that the fixed plate and the other end of the first lead plate are spaced apart from each other with therebetween; and

in the second welding step, the electrodes are caused to contact, from the side opposite to the first cell, against the fixed plate and the other end of the first lead plate, respectively, which have contacted against the first cell, and the electric current is applied to the electrodes to thereby electric resistance weld the fixed plate and first lead plate to the first cell.

8. The method for producing an assembled battery according to Claim 7, wherein, in the contacting step, the second gap is determined as a gap to achieve, in the second welding step, a heat amount with which a first cell welded portion can be molten, the first cell welded portion being provided on the first cell to weld the fixed plate and the first lead plate.

9. The method for producing an assembled battery according to Claim 8, wherein, in the contacting step, the second gap is determined as a gap that is not larger than a size within a range between 5 mm and 7 mm.

10. The method for producing an assembled battery according to Claim 7, wherein, in the contacting step, the second gap is determined as a gap to prevent discharge between the fixed plate and the other end of the first lead plate.

11. The method for producing an assembled battery according to Claim 10, wherein, in the contacting step, the second gap is determined as a gap that is equal to or larger than a size within a range between 0.01 mm and 0.15 mm.

12. The method for producing an assembled battery according to Claim 1 or 2, wherein, the connected member includes a third cell and a fourth cell;
in the preparation step, a third lead plate for electrically connecting the third cell and the fourth cell is prepared;
in the contacting step, the other end of the second lead plate and one end of the third lead plate are caused to contact against the third cell in such a manner that the other end of the second lead plate and the one end of the third lead plate are spaced apart from each other with therebetween; and
in the connection step, the electrodes are caused to contact, from the side opposite to the third cell, against the other end of the second lead plate and the one end of the third lead plate which have contacted the third cell, and the electric current is applied to the electrodes to thereby electric resistance weld the second lead plate and the third lead plate to the third cell;
the method further comprising a third welding step of welding the other end of the third lead plate and the fourth cell.

13. The method for producing an assembled battery according to Claim 12, further comprising a supporting step of supporting a pair of rod-shaped electrodes in such a manner that the electrodes are spaced apart from each other with a gap corresponding to the first gap and the third gap therebetween;
in the contacting step, one end of the first lead plate and one end of the second lead plate are caused to contact against the second cell and the other end of the second lead plate and one end of the third lead plate are caused to contact against the third cell, according to the positional relationship and the gap between the rod-shaped electrodes supported in the supporting step; and
the first welding step and the third welding step are successively performed by displacing, on a plane perpendicular to the longitudinal direction of the rod-shaped electrodes, the relative position between the rod-shaped electrodes supported in the supporting step and the first lead plate, the second lead plate, and the third lead plate without displacing the relative position around an axis that is parallel to the longitudinal direction of the rod-shaped electrodes, and by causing separation and contact between the rod-shaped electrodes and the first lead plate, the second lead plate, and the third lead plate in the longitudinal direction of the rod-shaped electrodes.

14. The method for producing an assembled battery according to Claim 12, wherein, in the contacting step, the third gap is determined as a gap to achieve, in the connection step, a heat amount with which a third cell welded portion can be molten, the third cell welded portion being provided on the third cell to weld the second lead plate and the third lead plate.

15. The method for producing an assembled battery according to Claim 14, wherein, in the contacting step, the third gap is determined as a gap that is not larger than a size within a range between 5 mm and 7 mm.

16. The method for producing an assembled battery according to Claim 12, wherein, in the contacting step, the third gap is determined as a gap to prevent discharge between the other end of the second lead plate and one end of the third lead plate.

17. The method for producing an assembled battery according to Claim 16, wherein, in the contacting step, the third gap is determined as a gap that is equal to or larger than a size within a range between 0.01 mm and 0.15 mm.

18. The method for producing an assembled battery according to Claim 1 or 2, wherein, in the preparation step, the first lead plate and the second lead plate are prepared, both of which are made of copper.

19. The method for producing an assembled battery according to Claim 1 or 2, wherein, in the preparation step, the first lead plate and the second lead plate are prepared by cutting a lead plate component member extending in a predetermined direction, along the longitudinal direction thereof.

20. An assembled battery produced by using the production method according to Claim 1 or 2.

21. An assembled battery having a first cell, a second cell electrically connected to the first cell, and a connected member electrically connected to the first cell and the second cell, comprising:

a first lead plate that is provided so as to span between the first cell and the second cell, the first lead plate being adapted to electrically connect the first cell and the second cell; and

a second lead plate that is provided so as to span between the second cell and the connected member, the second lead plate being adapted to electrically connect the second cell and the connected member, wherein the first lead plate and the second lead plate are electric resistance welded to the second cell in such a manner that an end of the first lead plate and an end of the second lead plate are spaced apart from each other with therebetween, and

only an electric resistance welded portion that is formed by one of a pair of positive and negative electrodes for electric resistance welding is formed between the end of the first lead plate and the second cell, and only an electric resistance welded portion that is formed by the other of the pair of positive and negative electrodes for the electric resistance welding is formed between the end of the second lead plate and the second cell.

FIG.1

EP 2 448 039 A1

## FIG.2

## FIG.3

## FIG.4

FIG.5

EP 2 448 039 A1

# FIG.6

# FIG.7

EP 2 448 039 A1

# FIG.8

# FIG.9

# FIG.10

| | | MATERIAL | MELTING POINT (°C) | PLATE THICKNESS L1(=L3) (mm) | ELECTRIC RESISTIVITY $\rho$ ($\Omega$ m) | LENGTH L1(=L3) (mm) | AREA S (mm²) | RESISTANCE VALUE R1(=R3) $\rho \times$ L1(=L3) ÷ S ($\mu \Omega$) |
|---|---|---|---|---|---|---|---|---|
| LEAD PLATE | #1 | COPPER | 1,083 | 0.15 | $1.68 \times 10^{-8}$ | 0.15 | 0.785398 | 3 |
| | #2 | NICKEL | 1,455 | 0.15 | $6.99 \times 10^{-8}$ | 0.15 | 0.785398 | 13 |
| | #3 | IRON | 1,539 | 0.15 | $1.00 \times 10^{-7}$ | 0.15 | 0.785398 | 19 |

EP 2 448 039 A1

# FIG.11

| | MATERIAL | MELTING POINT (°C) | PLATE THICKNESS L4 (mm) | ELECTRIC RESISTIVITY $\rho$ ($\Omega$m) | LENGTH L2) (mm) | AREA S ($mm^2$) | RESISTANCE VALUE R2 $\rho \times L2 \div S$ ($\mu\Omega$) |
|---|---|---|---|---|---|---|---|
| BOTTOM OF BATTERY CASE | IRON | 1,539 | 0.3 | $1.00 \times 10^{-7}$ | L2 | 0.3 | $333 \times L2$ |

EP 2 448 039 A1

# FIG.12

FIG.13

| DISTANCE (mm) | | 0~ | 0.01 | 0.15 | 5 | 6 | 7 | 7~ |
|---|---|---|---|---|---|---|---|---|
| NO DISCHARGE | NO TOLERANCE | × | O | O | O | O | O | O |
| | WITH TOLERANCE | × | × | O | O | O | O | O |
| CASE BOTTOM MOLTEN | VOLTAGE 8V | O | O | O | O | × | × | × |
| | VOLTAGE 10V | O | O | O | O | O | × | × |
| | VOLTAGE 12V | O | O | O | O | O | O | × |
| ALLOWABLE GAP | | × | △ | O | O | △ | △ | × |

EP 2 448 039 A1

# FIG.14

EP 2 448 039 A1

FIG.15

EP 2 448 039 A1

## INTERNATIONAL SEARCH REPORT

| International application No. |
|---|
| PCT/JP2011/003957 |

A. CLASSIFICATION OF SUBJECT MATTER
*H01M2/10*(2006.01)i, *H01M2/20*(2006.01)i

According to International Patent Classification (IPC) or to both national classification and IPC

B. FIELDS SEARCHED

Minimum documentation searched (classification system followed by classification symbols)
H01M2/10, H01M2/20

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2007-194036 A (Sanoh Industrial Co., Ltd.), 02 August 2007 (02.08.2007), full specifications & WO 2007/083702 A1 | 1-21 |
| A | JP 2008-91233 A (Sanyo Electric Co., Ltd.), 17 April 2008 (17.04.2008), full specifications (Family: none) | 1-21 |
| A | JP 2000-77094 A (Yuasa Corp.), 14 March 2000 (14.03.2000), full specifications (Family: none) | 1-21 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 September, 2011 (20.09.11) | 04 October, 2011 (04.10.11) |

| Name and mailing address of the ISA/ Japanese Patent Office | Authorized officer |
|---|---|
| Facsimile No. | Telephone No. |

Form PCT/ISA/210 (second sheet) (July 2009)

## INTERNATIONAL SEARCH REPORT

International application No.

PCT/JP2011/003957

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2004-31062 A  (Japan Storage Battery Co., Ltd.),<br>29 January 2004 (29.01.2004),<br>full specifications<br>(Family: none) | 1-21 |
| A | JP 2004-265610 A  (Sony Corp.),<br>24 September 2004 (24.09.2004),<br>full specifications<br>& US 2006/0032667 A1    & WO 2004/066446 A1<br>& TW 237918 B          & KR 10-2005-0099505 A<br>& CN 1757138 A | 1-21 |
| A | JP 2009-187691 A  (Panasonic Corp.),<br>20 August 2009 (20.08.2009),<br>full specifications<br>(Family: none) | 1-21 |
| A | JP 2008-262751 A  (Matsushita Electric Industrial Co., Ltd.),<br>30 October 2008 (30.10.2008),<br>full specifications<br>(Family: none) | 1-21 |
| A | JP 7-134976 A  (Honda Motor Co., Ltd., Sanyo Electric Co., Ltd.),<br>23 May 1995 (23.05.1995),<br>full specifications<br>& US 5418083 A          & EP 607675 A1<br>& CN 1100564 A | 1-21 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009070614 A